## Europäisches Patentamt

## European Patent Office

## Office européen des brevets

(19)

(11) Veröffentlichungsnummer: **0 178 416**
**B1**

(12) **EUROPÄISCHE PATENTSCHRIFT**

(45) Veröffentlichungstag der Patentschrift:
**30.03.88**

(51) Int. Cl.⁴: **F 24 H 1/12**

(21) Anmeldenummer: **85110304.4**

(22) Anmeldetag: **17.08.85**

(54) **Gas- oder ölbeheizter Wassererhitzer.**

(30) Priorität: **18.09.84 DE 3434194**
**05.06.85 DE 3520136**

(43) Veröffentlichungstag der Anmeldung:
**23.04.86 Patentblatt 86/17**

(45) Bekanntmachung des Hinweises auf die Patenterteilung:
**30.03.88 Patentblatt 88/13**

(84) Benannte Vertragsstaaten:
**AT DE FR GB IT**

(56) Entgegenhaltungen:
**EP - A - 0 073 560**
**DE - A - 3 121 220**
**DE - A - 3 315 010**
**DE - B - 2 210 575**

(73) Patentinhaber: **ROBERT BOSCH GMBH, Postfach 50,**
**D-7000 Stuttgart 1 (DE)**

(72) Erfinder: **Kehl, Albin, Dr. Dipl.-Phys., Im Viehtrieb 16,**
**D-7253 Renningen 2 (DE)**
Erfinder: **Schmuker, Franz, Dipl.-Ing., Frühlingstrasse 29,**
**D-7321 Wangen (DE)**
Erfinder: **Leukert, Gerhard, Dipl.-Ing. (FH),**
**Panoramastrasse 90, D-7310 Plochingen (DE)**
Erfinder: **Kohl, Walter, Schwalbenweg 40,**
**D-7064 Remshalden (DE)**
Erfinder: **Sauer, Christian, Dipl.-Ing.,**
**Stauffenbergstrasse 3, D-7120 Bietigheim (DE)**
Erfinder: **Schmid, Josef, Ing. grad., Max-Eyth-Strasse 43,**
**D-7317 Wendlingen (DE)**

## Beschreibung

Die Erfindung geht aus von einem gas- oder ölbeheizten Wassererhitzer nach dem ersten Teil des unabhängigen Anspruchs. Bei einem bekannten Wassererhitzer dieser Gattung (DE-A-31 21 220) ist der zweite Wärmetauscher räumlich unterhalb des Gebläses angeordnet und mit dem ersten Wärmetauscher zu einer Baueinheit zusammengefasst. Diese Anordnung bedingt eine Sonderbauart des Gerätes, welche von einer bekannten Bauart mit nur einem Wärmetauscher erheblich abweicht. Bei einem anderen bekannten Wassererhitzer mit zwei sowohl in Bezug auf die Wasser- als auch die Verbrennungsgasführung in Reihe geschalteten Wärmetauschern (EP-A-0 073 560) ist der zweite Wärmetauscher als separate Baueinheit ausgebildet und in einem aus dem Gerätegehäuse herausgeführten Abgaskanal angeordnet. Bei dieser Ausführung fallen bei der Montage des Gerätes an dessen Aufstellungsort eine Reihe von zusätzlichen Installationsarbeiten an, welche die Montage verteuern und zusätzliche Funk-tionskontrollen am Aufstellungsort erforderlich ma-chen.

Die erfindungsgemässe Anordnung mit den kenn-zeichnenden Merkmalen des unabhängigen An-spruchs hat demgegenüber den Vorteil, dass ein Gerät mit nur einem Wärmetauscher ohne grössere Änderungen und unter weitgehender Verwendung vorhandener Baugruppen bereits fabrikseitig mit dem zweiten Wärmetauscher versehen werden kann.

Durch die in den Unteransprüchen aufgeführten Merkmale sind vorteilhafte Weiterbildungen der Anordnung nach dem Hauptanspruch möglich.

Eine gedrängte und leicht zu montierende Ausführung ergibt sich, wenn der zweite Wärmetauscher von einem flachen Gehäuse umgeben ist, welches am Abgassammler über zwei Stative befestigt ist, zwischen denen das Gehäuse angeordnet ist. Dabei können die Stative vorzugsweise als Abgasschächte ausgebildet sein, welche das Innere des Abgassammlers mit dem Gehäuse für den zweiten Wärmetauscher verbinden. Der Abgassammler selbst ist in diesem Fall in zwei Kammern geteilt, von denen die eine mit dem ersten Wärmetauscher und dem einen Abgasschacht, und die andere mit dem anderen Abgasschacht und dem Eingangsstutzen des Gebläses in Verbindung steht.

Eine definierte Strömung des Abgases im zweiten Wärmetauscher ergibt sich, wenn das den zweiten Wärmetauscher aufnehmende Gehäuse zwischen den Einmündungen der beiden Abgasschächte eine vom Gehäuseboden ausgehende Trennwand hat, die zwischen sich und dem Gehäusedeckel einen Durchtrittspalt für das Abgas frei lässt.

Zum Abführen des am zweiten Wärmetauscher ausfallenden Kondenswassers wird vorgeschlagen, dass der Boden des den zweiten Wärmetauscher aufnehmenden Gehäuses geneigt ist und an seiner tiefsten Stelle ein Abflussrohr an das Gehäuse angeschlossen ist.

Nach einem weiteren Vorschlag der Erfindung ist vorgesehen, dass das Abgasrohr unmittelbar hinter dem Gerät einen ansteigenden Abschnitt hat und dass an der geräteseitigen Anschlussstelle des Abgasrohres eine Leitung zum Abführen des im Abgasrohr anfallenden Kondenswassers angeschlossen ist. Diese Anordnung ist besonders vorteilhaft bei den sogenannten Aussenwandgeräten, bei denen das Abgasrohr konzentrisch in einem Frischluftrohr angeordnet und dieses durch einen Mauerdurchbruch ins Freie geführt ist.

Die Erfindung sieht weiter vor, dünnwandige Rohre, an deren Stirnende ein Bauteil zu befestigen ist und die bei der Installation des Gerätes gegebenenfalls gekürzt werden müssen, auf der Aussenseite mit mindestens zwei je entlang einer Mantellinie verlaufenden Montageröhrchen zu versehen, die sich über mindestens einen Teil der Rohrlänge erstrecken und deren Bohrungen zur passgerechten Aufnahme von Dübeln für Befestigungsschrauben des Bauteils dienen.

Weitere vorteilhafte Ausgestaltungen und erfindungsgemässe Merkmale gehen aus der nachfolgen-den Beschreibung eines Ausführungsbeispiels her-vor.

Ein Ausführungsbeispiel der Erfindung ist in der Zeichnung dargestellt und in der nachfolgenden Beschreibung näher erläutert. Es zeigen

Figur 1 eine Vorderansicht eines als Aussenwandgerät ausgeführten gasbeheizten Wassererhitzers ohne Ummantelung;

Figur 2 eine Seitenansicht des Wassererhitzers nach Figur 1;

Figur 3 den zweiten Wärmetauscher des Wassererhitzers nach Figur 1 vergrössert und im Schnitt;

Figur 4 eine Teilansicht des Wassererhitzers nach Figur 1 im Bereich des Abgassammlers;

Figur 5 einen Schnitt nach der Linie V-V in Figur 4;

Figur 6 einen Schnitt durch die Frischluft- und Abgasführung des Wassererhitzers nach Figur 1;

Figur 7 das Frischluftrohr des Wassererhitzers nach Figur 1;

Figur 8 eine Seitenansicht des Frischluftrohres nach Figur 7;

Figur 9 einen Schnitt nach der Linie IX-IX in Figur 8;

Figur 10 den Ausblasstutzen des Wassererhitzers nach Figur 1 in Ansicht;

Figur 11 einen Schnitt nach der Linie XI-XI in Figur 10 und

Figur 12 eine teilweise geschnittene Seitenansicht einer Einzelheit des Wassererhitzers nach Figur 1.

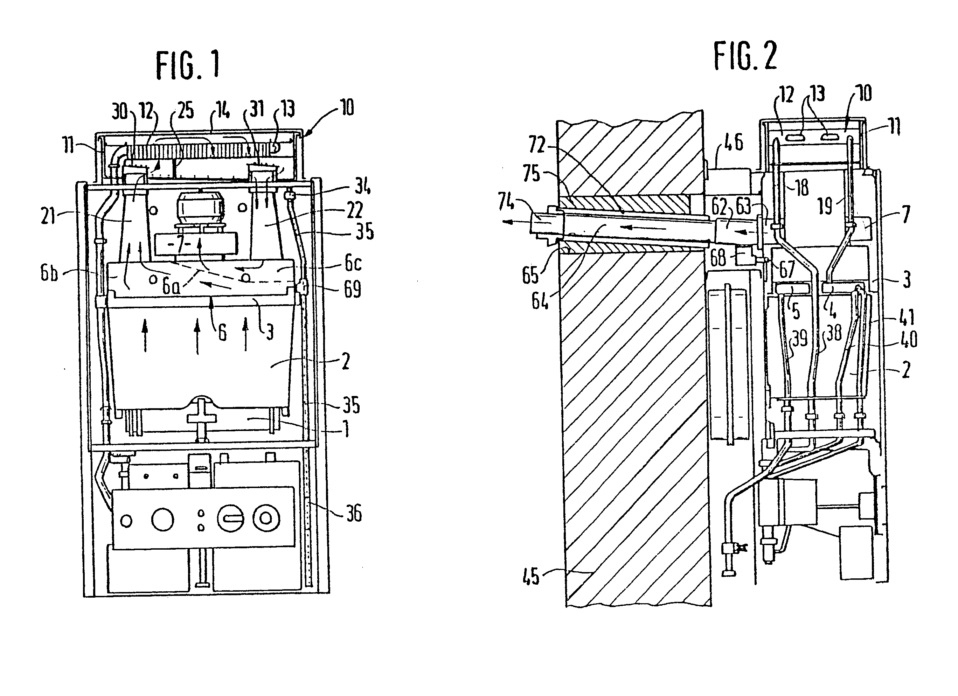

Der Wassererhitzer hat einen Brenner 1, über welchen ein Brennschacht 2 und darüber ein erster Wärmetauscher 3 angeordnet sind. Dieser hat wie bekannt einen Lamellenblock mit senkrecht stehenden Lamellen aus Edelstahl, der von wasserführenden Kupferrohren durchsetzt ist, die bündelweise zusammengefasst auf der einen Seite in Wasserkammern 4, 5 (Figur 2) und auf der anderen Seite in einer gemeinsamen Umlenkkammer ausmünden. Auf dem Wärmetauscher 3 ist ein kastenförmiger Abgassammler 6 für das Abgas des Brenners 1 befestigt, der durch einen teilweise schräg verlaufenden, aus nicht wärmeisolierendem Material bestehenden Zwischenboden 6a in zwei Kammern 6b und 6c unterteilt ist. Die untere Kammer 6b übt die eigentliche Abgassammelfunktion aus, während die obere, 6c, als Ansaugschacht für ein Gebläse 7 dient, welches auf dem Abgassammler 6 befestigt ist.

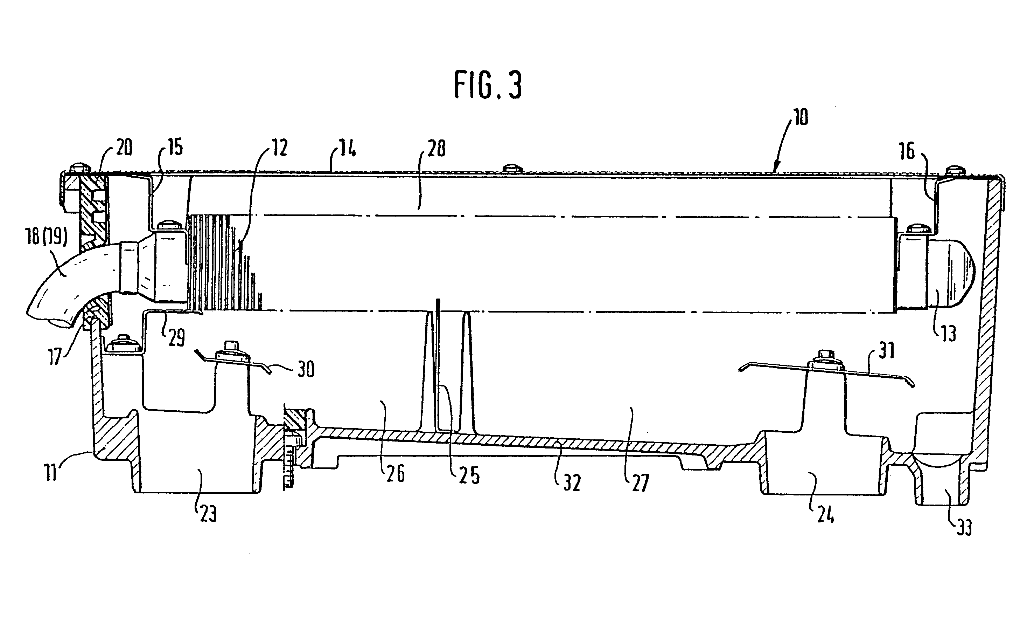

Über dem Gebläse 7 ist ein zweiter Wärmetauscher 10 befestigt, der ein vorzugsweise aus Leichtmetall bestehendes Gehäuse 11 hat. Der Wärmetauscher 10 besteht aus einem Lamellenblock 12 (Figur 3) mit senkrecht stehenden Lamellen aus Edelstahl, der von einer Wasserrohrschlange 13 aus Kupfer durchsetzt ist. Das Gehäuse 11 ist oben durch einen Deckel 14 verschlossen, an welchem der Lamellenblock 12 mittels Winkelblechen 15, 16 befestigt ist. Die eine Seitenwand des Gehäuses 11 hat zwei in Figur 3 hintereinander liegende Öffnungen 17 für den Durchtritt der beiden Anschlussleitungen 18, 19 der Wasserrohrschlange 13, welche durch Formteile 20 aus Kunststoff abgedichtet sind.

Das Gehäuse 11 ist durch zwei Stative 21, 22 auf dem Abgassammler 6 befestigt, zwischen denen das Gebläse 7 angeordnet ist. Die Stative 21, 22 sind hohl ausgebildet und dienen gleichzeitig als Kanäle für die Abgasführung. Das Stativ 21 verbindet die untere Kammer 6b des Abgassammlers 6 mit einem Eingangsstutzen 23 des Gehäuses 11, während das Stativ 22 einen Ausgangsstutzen 24 des Gehäuses 11 mit der oberen Kammer 6c des Abgassammlers 6 verbindet.

Zwischen dem Eingangsstutzen 23 und dem Ausgangsstutzen 24 ist im Gehäuse 11 ein Trennblech 25 angeordnet, welches etwa bis zur unteren Kantenebene des Lamellenblockes 12 reicht. Das Trennblech 25 teilt im Inneren des Gehäuses 11 eine Eingangskammer 26 von einer etwa doppelt so breiten Ausgangskammer 27 ab, die beide über eine oberhalb des Lamellenblockes 12 angeordnete Kammer 28 miteinander verbunden sind. Ein Leitblech 29 schirmt die Eingangskammer 26 gegen die Anschlüsse der Wasserrohrschlange 13 ab und Tropfbleche 30, 31 sind vorgesehen, um vom Lamellenblock 12 abtropfendes Kondensat gegen den schrägverlaufenden Boden 32 des Gehäuses 11 zu leiten, der an seiner tiefsten Stelle mit einem Ablaufstutzen 33 versehen ist.

Das Trennblech 25 ist mit Durchbrüchen versehen, über welche das Kondensat aus der Eingangskammer 26 zum Ablaufstutzen 33 fliessen kann. An den Ablaufstutzen 33 ist mittels eines Gummiformteils 34 (Figur 1) eine aus Leichtmetall bestehende Abflussleitung 35 angeschlossen, die über einen Siphon 36 in das Abwassersystem des Hauses führt.

Der Wassererhitzer ist mit einer Anschlussleitung 38 für einen Heizungsrücklauf versehen, welche mit der einen Anschlussleitung 18 des zweiten Wärmetauschers 10 verbunden ist. Die andere Anschlussleitung 19 des Wärmetauschers 10 ist mit der Wasserkammer 4 des ersten Wärmetauschers 3 verbunden, aus dessen anderer Wasserkammer 5 eine Anschlussleitung 39 für einen Heizungsvorlauf herausführt. Nach der Installation des Gerätes liegen die Wärmetauscher 10 und 3 in Reihe im Heizkreis, wobei das rücklaufende Heizwasser zunächst den Wärmetauscher 10 und dann den Wärmetauscher 3 durchströmt, bevor es aufgeheizt in den Heizungsvorlauf gelangt. Durch die Heizwasser führenden Rohre des Wärmetauschers 3 ist eine Rohrschlange für Brauchwasser hindurchgeführt, welche über Anschlussleitungen 40, 41 an das Brauchwassernetz des Hauses angeschlossen ist.

Zum Befestigen des Wassererhitzers an einer Gebäudewand 45 ist ein Mauerkasten 46 vorgesehen, der gleichzeitig zur Abgasabführung und zur Frischluftzuführung dient. Der Mauerkasten 46 ist an seiner vorderen Stirnseite mit einer Flanschplatte 47 versehen, welche einen zentralen Durchbruch 48 und mehrere seitlich davon angeordnete Löcher 49 hat und an welcher mehrere nach vorn abstehende Gewindebolzen 50 befestigt sind. Diese treten durch Bohrungen in einem plattenförmigen Tragelement 52 des Wassererhitzers hindurch, welches beim Ausführungsbeispiel die Rückwand einer geschlossenen Innenkammer 53 ist. Auf die Gewindebolzen 50 sind Muttern aufgeschraubt, welche eine gasdichte Verbindung des Mauerkastens 46 mit der Innenkammer 53 sicherstellen. Den Löchern 49 im Mauerkasten 46 stehen entsprechende Durchbrüche 54 im Tragelement 52 gegenüber. Auf der Rückseite hat der Mauerkasten 46 eine Montageplatte 54a, mit welcher er an der Gebäudewand 45 befestigt ist. Eine bevorzugte Konstruktion des Mauerkastens 46 ist beispielsweise in den Unterlagen des DE-U 78 12 645 beschrieben.

Beim Wassererhitzer nach dem Ausführungsbeispiel liegen die beiden unteren Gewindebolzen 50 des Mauerkastens 46 hinter dem Abgassammler 6 und werden von diesem verdeckt. Um die Montage des Gerätes trotzdem von vorne durchführen zu können, sind durch den Abgassammler 6 koaxial zu den verdeckten Gewindebolzen 50 zwei Rohre 55 geführt und mit den Seitenwänden 56 des Abgassammlers 6 dicht verbördelt. Durch jedes Rohr 55 ist ein ebenfalls als Rohr ausgeführtes Steckelement 57 kleineren Durchmessers hindurchgeführt, an dessen einem Ende eine Mutter 58 befestigt ist. Mit Hilfe der Steckelemente 57 können die Muttern 58 auf die Gewindebolzen 50 aufgeschraubt werden.

Jedes Steckelement 57 trägt einen Gummiring 59, welcher zur Dämpfung von Vibrationgeräuschen dient und durch eine Rollnut im Steckelement 57 in seiner Lage fixiert ist. Ferner trägt jedes Steckelement 57 eine Pappscheibe 60, deren Durchmesser grösser als der Innendurchmesser des Rohres 55 ist und welche dadurch das Steckelement 57 unverlierbar zwischen dem Abgassammler 6 und dem Tragelement 52 hält. Das Steckelement 57 wird komplett mit Pappscheibe 60 vor der Montage des Abgassammlers 6 durch das Rohr 55 gesteckt und ist danach nur noch zwischen Tragelement 52 und der hinteren Seitenwand 56 des Abgassammlers 6 bewegbar.

In die zentrale Öffnung 48 des Mauerkastens 46 ist eine Buchse 62 aus säurebeständigem Material eingesetzt, in welche bei angebautem Wassererhitzer ein Ausblasstutzen 63 des Gebläses 7 hineinragt. In das andere Ende der Buchse 62, welches leicht nach oben abgewinkelt ist, ist ein aus dünnwandigem Material bestehendes Abgasrohr 64 eingesteckt, welches eine horizontale, im Durchmesser wesentlich grössere Öffnung 65 in der Gebäudewand 45 mit einer Steigung von etwa 4° durchsetzt. An der tiefsten Stelle ist die Buchse 62 mit einer Bohrung 66 versehen, an die eine aus korrosionsbeständigem Werkstoff bestehende Leitung 67 mittels eines Formteils 68 angeschlossen ist. Die Leitung 67 führt zur Abflussleitung 35 (Figur 1), an welche sie mit Hilfe eines Gummiformteils 69 angeschlossen ist. Die Steckverbindung des Abgasrohrs 64 mit der Buchse 62 ist durch einen O-Ring 70 gegen das Innere des Mauerkastens 46 abgedichtet.

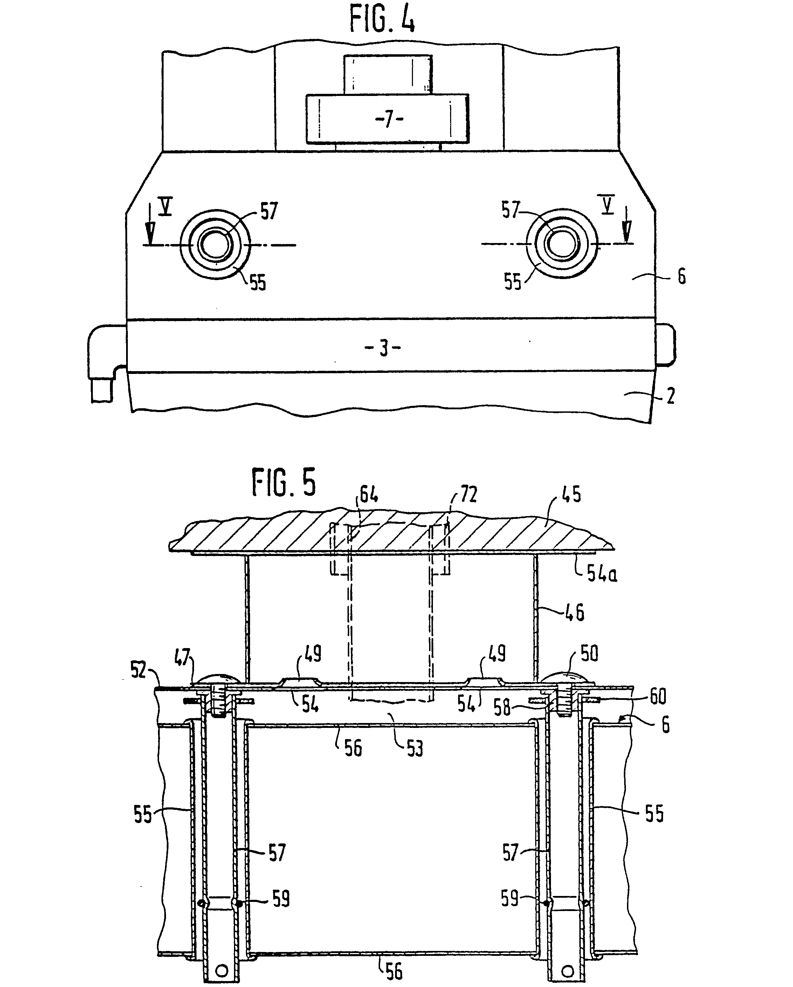

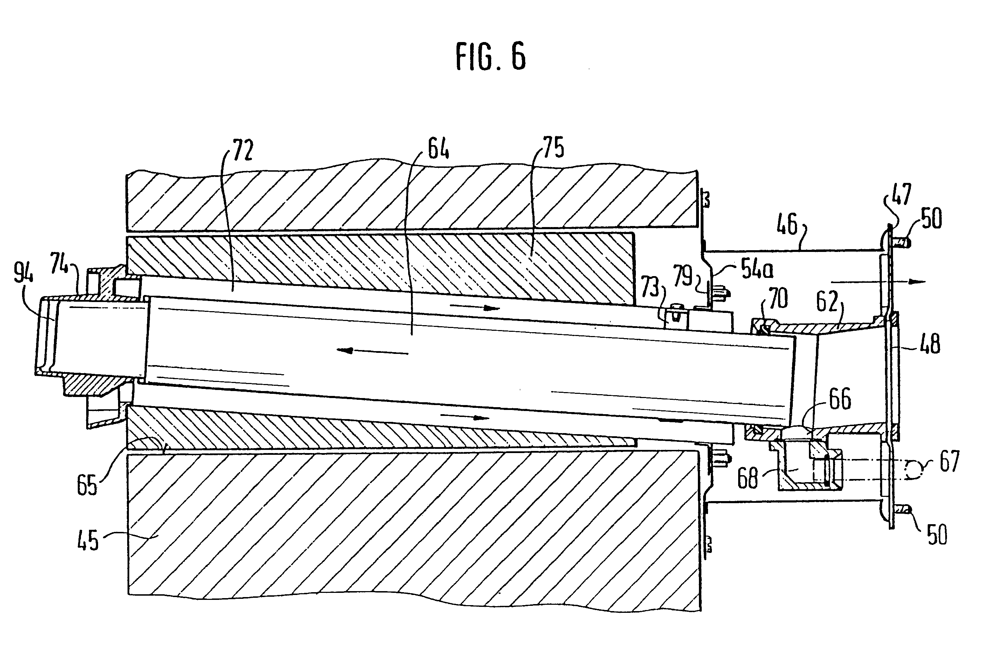

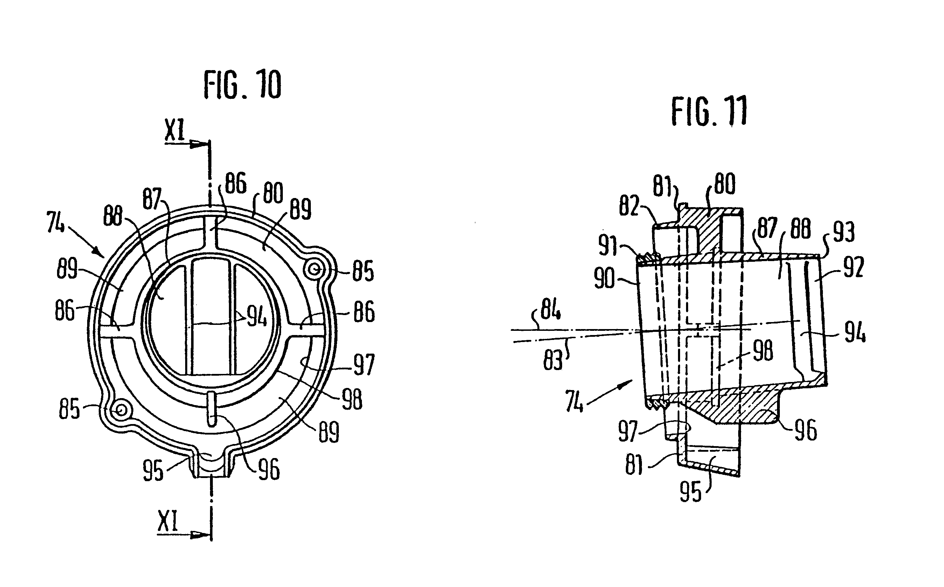

Das Abgasrohr 64 ist konzentrisch von einem Frischluftrohr 72 umgeben, in welchem das Abgasrohr 64 geräteseitig durch Schellen 73 und andererseits durch einen auf die aussenliegenden Rohrmündungen aufgesteckten Ausblasstutzen 74 (Figuren 10 und 11) gehalten ist. Das Frischluftrohr 72 ist mit entsprechender Steigung in einem zylindrischen Mantelkörper 75 aus Polyurethanschaum eingebettet, der die Öffnung 65 der Gebäudewand 45 passend ausfüllt. Das Frischluftrohr 72 ist, wie in Figur 6 gezeigt und in Figur 5 angedeutet, in den Mauerkasten 46 hineingeführt, von wo die Frischluft durch die Löcher 49 in dessen Flanschplatte 47 und die Löcher 54 im Tragelement 52 in die Innenkammer 53 und zum Brenner 1 gelangt.

Am Aussenmantel des Frischluftrohres 72 sind zwei Montageröhrchen 76 achsparallel, jedoch in zwei im Winkel zueinander versetzten Radialebenen befestigt, z.B. angeschweisst. Die Montageröhrchen 76 dienen zum Einstecken von Dübeln 77 für Schrauben 78, mit denen der Ausblasstutzen 74 am Frischluftrohr 72 befestigt ist. Ausserdem üben die Montageröhrchen 76 die Funktion einer Verdrehsicherung für das Frischluftrohr 72 im Mantelkörper 75 aus, so dass bei winkelgerechter Montage des Mantelkörpers 75 in der Öffnung 65 das Frischluftrohr 72 und das Abgasrohr 64 die vorschriftsmässige Steigung von etwa 4° nach aussen haben. Die Montageröhrchen 76 sind so lang bemessen, dass das Frischluftrohr 72 bei einer Montage am Einbauort innerhalb des Längenbereichs A an jede vorhandene Wandstärke angepasst werden kann, wobei die Dübellöcher stets erhalten bleiben. Am inneren Ende des Frischluftrohrs 72 ist ein Ringflansch 79 befestigt, welcher an die Montageplatte 54a des Mauerkastens 46 angeschraubt ist.

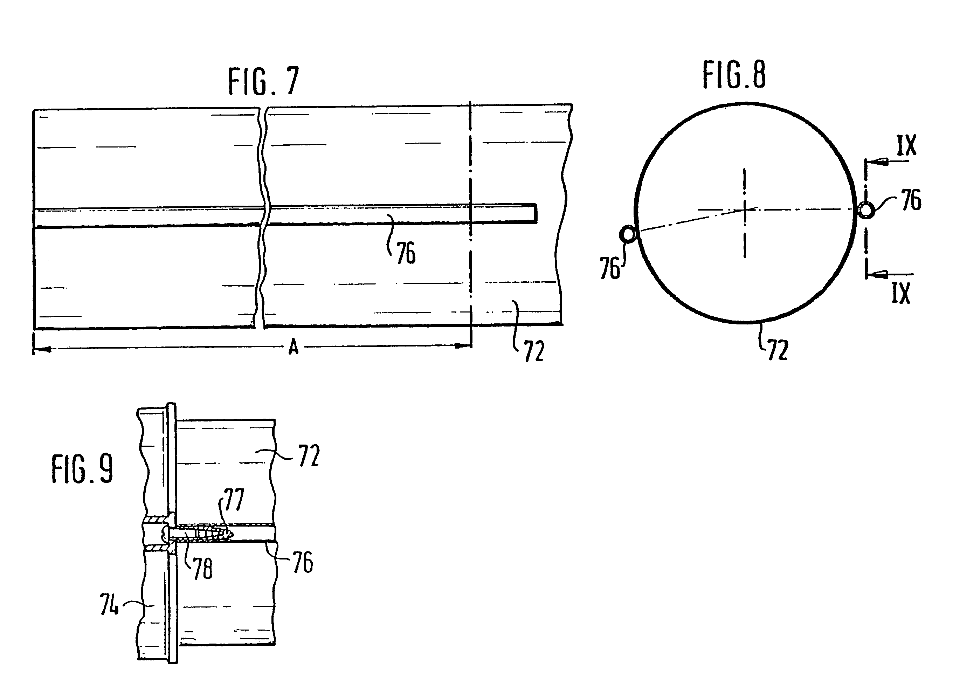

Der als Ganzes mit der Bezugszahl 74 bezeichnete Ausblasstutzen hat einen Befestigungsflansch 80 (Figur 11), der mit einer umlaufenden Schulterfläche 81 versehen ist, welche am Mantelkörper 75 anliegt. Der Befestigungsflansch 80 ist ferner mit einem zylindrischen Kragen 82 versehen, der passend in das Frischluftrohr 72 eingreift und den Ausblasstutzen 74 gegenüber dem Frischluftrohr 72 zentriert. Die Mittelachse 83 des Kragens 82 ist um 4° gegenüber einer Normalen 84 zur Schulterfläche 81 geneigt, wodurch der Steigung des Frischluftrohrs 72 im Mantelkörper 75 Rechnung getragen ist. Am Befestigungsflansch 80 sind ferner zwei Bohrungen 85 vorgesehen, durch welche die Schrauben 78 (Figur 9) zum Befestigen des Ausblasstutzens 74 am Frischluftrohr 72 hindurchgreifen. Durch die unsymmetrische Anordnung der Bohrungen 85 und der Montageröhrchen 76 am Frischluftrohr 72 ist sichergestellt, dass der Ausblasstutzen 74 nur in der vorgeschriebenen Lage montiert werden kann.

Der Befestigungsflansch 80 ist über drei Stege 86 einstückig mit einer Nabe 87 verbunden, welche achsparallel zum Kragen 82 ausgerichtet ist und einen Ausblaskanal 88 enthält. Zwischen den Stegen 86 sind ringsegmentförmige Aussparungen 89 gebildet, durch welche die Frischluft in den Ringraum zwischen Frischluftrohr 72 und Abgasrohr 64 gelangt. Die Nabe 87 hat einen anströmseitigen Abschnitt 90, der in das Abgasrohr 64 ragt und einen Dichtring 91 trägt. In einem abströmseitigen Abschnitt 92 der Nabe 87, welcher über den Befestigungsflansch 80 axial hervorsteht, und gegenüber dem vorderen Mündungsrand 93 der Nabe 87 zurückversetzt, sind Gitterstäbe 94 zum Schutz gegen Eindringen von Fremdkörpern in das Abgasrohr 64 angebracht.

Am unteren Rand des Befestigungsflansches 80 ist eine Tropfrinne 95 vorgesehen, über welcher eine Tropfnase 96 der Nabe 87 angeordnet ist. Die Aussparungen 89 für den Durchtritt der Frischluft sind durch Tropfkanten 97 und 98 am Befestigungsflansch 80 bzw. der Nabe 87 begrenzt.

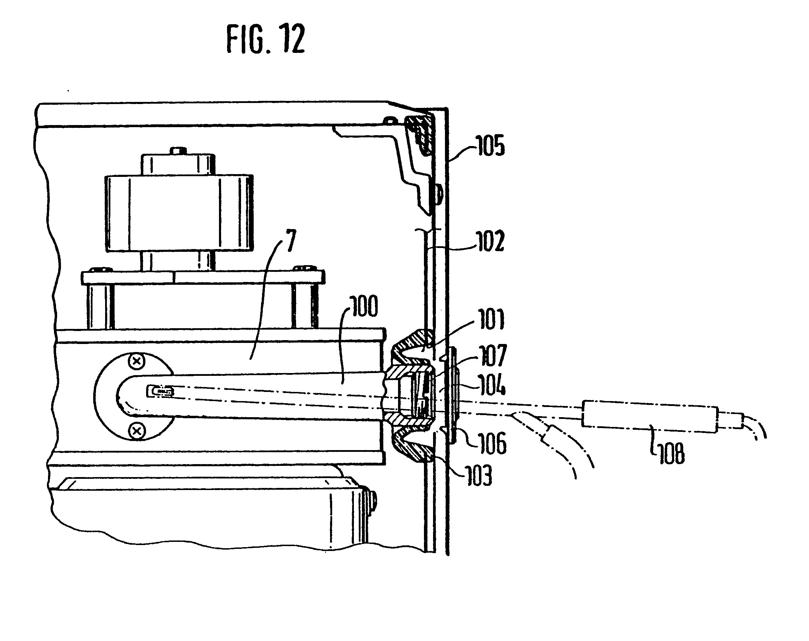

An das Gehäuse des Gebläses 7 ist seitlich ein Sondenrohr 100 angesetzt (Figur 12), welches bis in eine Öffnung 101 in der Vorderwand 102 der Innenkammer 53 führt. Die Öffnung 101 ist durch eine Manschette 103 abgedichtet, welche gleichzeitig das vordere Ende des Sondenrohres 100 schüttelsicher festhält. Der Öffnung 101 liegt eine Öffnung 104 in der Vorderwand 105 der Ummantelung des Gerätes gegenüber, welche durch eine wegschwenkbare Blende 106 nach aussen abgedeckt ist. Die Blende 106 kann vorzugsweise ein Markenschild oder dergleichen sein. Das Sondenrohr 100 ist vorn durch eine Schraube 107 gasdicht verschlossen. Nach Wegschwenken der Blende 106 und Herausdrehen der Schraube 107 kann eine Messsonde 108 zur Messung der Abgastemperatur bzw. -zusammensetzung in den Abgasweg eingefügt werden.

Die Wasserrohrschlange 13 des Wärmetauschers 10 wird vorteilhaft an den von den Lamellen nicht bedeckten, spaltförmigen Oberflächenbereichen nach dem Fügen der Lamellen mit einem zunächst flüssigen bis breiigen Mittel überzogen, welches danach fest oder elastomer wird. Solche Mittel können Lacke, Harze, Loctide oder ähnliches sein. Ferner könnte die Wasserrohrschlange 13 durch eine korrosionsbeständige galvanische Schicht geschützt sein, die vor dem Fügen der Lamellen aufgebracht wird. Diese Schutzschicht muss so duktil sein, dass die Aufweitung des Rohres nach dem Aufbringen der Lamellen ohne Rissbildung mitgemacht wird. Als Material für eine solche Schicht hat sich Sulfamat-Nickel bewährt.

Nach einem anderen Vorschlag der Erfindung wird die Wasserrohrschlange 13 mit einer Folie überzogen, die vorzugsweise aus einem korrosionsbeständigen Metall, z.B. Edelstahl 18/8 besteht. Die Dicke der Folie kann 10 bis 100 µm, vorzugsweise 40 bis 60 µm, betragen. Die Dampfdichtheit der Folie an den Nähten kann durch Stumpf- oder Überlappungsschweissen gewährleistet werden. Zusätzlich können die Nähte durch Klebstoffe oder Lacke oder Dichtungsstreifen abgedichtet werden.

Der beschriebene Wassererhitzer arbeitet wie folgt:

Die Verbrennungsluft gelangt durch die Aussparungen 89 im Ausblasstutzen 74, das Frischluftrohr 72, den Mauerkasten 46 und die Innenkammer 53 zum Brenner 1. Die Tropfkanten 97, 98 und die Tropfnase 96 am Ausblasstutzen 74 sorgen dafür, dass kein Regenwasser in das Innere des Gerätes gelangen kann. Die heissen Abgase des Brenners 1 durchströmen zuerst den Wärmetauscher 3, in welchen sie auf etwa 160°C abgekühlt werden. Danach gelangen die Abgase in die Kammer 6b des Abgassammlers 6, von wo sie über das Stativ 21 in die Eingangskammer 26 des zweiten Wärmetauschers 10 gelangen. In diesem durchströmen die Abgase etwa ein Drittel des Lamellenblockes 12 von unten nach oben und werden danach in der Kammer 26 umgelenkt, wonach sie die restlichen zwei Drittel des Lamellenblockes 12 von oben nach unten durchströmen.

Im Wärmetauscher 10 werden die Abgase um ca. 100 K weiter abgekühlt, so dass am Lamellenblock 12 Kondensat ausfällt. Dieses tropft auf den schrägen Boden 32 des Gehäuses 11 und gelangt über die Abflussleitung 35 in das Abwassersystem. Das über dem Eingangsstutzen 23 und dem Ausgangsstutzen 24 ausfallende Kondensat wird durch die Tropfbleche 30, 31 ebenfalls auf den Boden 32 abgeleitet, so dass kein Kondensat in die Stative 21, 22 gelangen kann. Das Leitblech 29 verhindert, dass ein Teil des Abgases den Lamellenblock 12 ungenutzt umgeht.

Das den Wärmetauscher 10 verlassende, mit Wasserdampf gesättigte Abgas wird nun vom Gebläse 7 über das Stativ 22 und die Kammer 6c des Abgassammlers 6 angesaugt und über die Buchse 62 in das Abgasrohr 64 gedrückt, von wo das Abgas über den Ausblasstutzen 74 in die Atmosphäre gelangt. Am Zwischenboden 6a des Abgassammlers 6 findet ein Wärmetausch zwischen dem Abgas vor und nach dem Wärmetauscher 10 statt, wodurch das dampfgesättigte Abgas in der Kammer 6c etwas erwärmt wird, bevor es in das Gebläse 7 gelangt. Diese geringfügige Aufheizung und die hohe Umgebungstemperatur beim Gebläse 7 bewirken, dass das Abgas im Gebläse 7 nicht mehr hundertprozentig wasserdampfgesättigt ist. Dadurch ist erreicht, dass im Gebläse 7 selbst kein Kondensat ausfällt und abgeleitet werden muss.

In dem aus dünnem, wärmeleitendem Material bestehenden Abgasrohr 64 findet ein Wärmetausch zwischen dem Abgas und der zuströmenden Frischluft statt. Dadurch wird die Frischluft vorgewärmt, das Abgas jedoch weiter abgekühlt, so dass im Abgasrohr 64 und im Ausblasstutzen 74 weiteres Kondensat ausfällt. Durch die Schräglage der Nabe 87 des Ausblasstutzens 74 und des Abgasrohres 64 wird das Kondensat in das Gerät zurückgeleitet, so dass eine Verschmutzung der Hausfassade durch abtropfendes Kondensat vermieden wird. Durch die Zurückversetzung der Gitterstäbe 94 im Ausblasstutzen 74 liegen diese ausschliesslich im Abgasstrom, so dass die Kondensatbildung an den Gitterstäben 94 stark reduziert ist.

Das vom Gerät aufzuheizende Rücklaufheizwasser durchströmt zuerst den zweiten Wärmetauscher 10 und anschliessend den ersten Wärmetauscher 3. Dadurch wird das Abgas ähnlich wie bei einem Gegenstromprinzip annähernd bis auf ca. 5 bis 10 K auf die Heizungsrücklauftemperatur abgekühlt. Weil die im zweiten Wärmetauscher 10 anfallende Wärme die Temperatur des Heizungswassers nur um ca. 2 bis 3 K anhebt, ist eine vollständige Verwirklichung des Gegenstromprinzips im Wärmetauscher 10 nicht nötig.

Beim Installieren des Wassererhitzers werden zunächst die aus dem geschäumten Mantelkörper 75, dem Frischluftrohr 72, dem Abgasrohr 64 und dem Ausblasstutzen 74 gebildete Baueinheit und der Mauerkasten 6 zusammengesteckt, wobei sich das Abgasrohr 64 in die Buchse 62 einschiebt. Danach wird der Mauerkasten 46 an den Ringflansch 79 des Frischluftrohrs 72 angeschraubt und die beschriebene Baueinheit in die Öffnung 65 der Gebäudewand 45 eingeschoben, bis der Montageflansch 54a des Mauerkastens 46 an der Gebäudewand 45 zur Anlage kommt. Die zum Befestigen des Mauerkastens 46 vorgesehenen Löcher in der Gebäudewand 45 werden mit einer Schablone hergestellt, so dass der Mantelkörper 75 die vorschriftsmässige Winkellage einnimmt. Durch den Winkelversatz der Längsachse des Mantelkörpers 75 gegenüber den Achsen des Abgasrohres 64 und des Frischluftrohrs 72 ist erreicht, dass die Öffnung 65 in der Gebäudewand 45 horizontal angebracht sein kann.

Der beschriebene Aufbau des Wassererhitzers stimmt weitgehend mit dem Aufbau eines bekannten Gerätes mit nur einem Wärmetauscher (3) überein. Ein solches bekanntes Gerät ist lediglich dadurch erweitert, dass auf dem Abgassammler 6 zwei gehäuseförmige Stative 21, 22 aufgesetzt werden, welche die Strömungskanäle für das Abgas enthalten und gleichzeitig den zweiten Wärmetauscher 10 tragen. Die beiden Stative 21, 22 schliessen zwischen sich das Gebläse 7 ein, so dass sich insgesamt ein gedrängter Aufbau ergibt. Die eine Anschlussleitung 18 der horizontal liegenden Wasserrohrschlange 13 des zweiten Wärmetauschers 10 ist an eine in der Zeichnung nicht sichtbare Montageplatte des Gerätes und die zweite Anschlussleitung 19 an die eine seitliche Wasserkammer 4 des ersten Wärmetauschers 3 angeschlossen. Dadurch ist auch die wasserseitige Installation des zweiten Wärmetauschers 10 sehr einfach und ohne nennenswerte Änderung des Wärmetauschers 3 möglich. Durch die vorgeschlagene Behandlung der Wasserrohrschlange 13 des zweiten Wärmetauschers 10 wird ein Anlösen der Oberfläche der Wasserrohrschlange 13 durch das saure Kondensat mit Sicherheit vermieden.

**Patentansprüche**

1. Gas- oder ölbeheizter Wassererhitzer, bei welchem über einem Brenner (1) ein Brennschacht (2) mit einem Wärmetauscher (3) und darüber ein kastenförmiger Abgassammler (6) angeordnet sind, ferner mit einem Gebläse (7), welches auf dem Abgassammler (6) befestigt und mit einem Abgasrohr (64) verbunden ist, und mit einem zweiten Wärmeübertrager (10), in welchem die Abgase soweit abkühlen, dass mindestens ein Teil des bei der Verbrennung gebildeten Wasserdampfs kondensiert, dadurch gekennzeichnet, dass der als selbständige Baueinheit ausgebildete zweite Wärmetauscher (10) oberhalb des Gebläses (7) angeordnet und über zwei getrennt durch den Abgassammler (6) hindurchgeführte Abgaskanäle (6b, 21 bzw. 22, 6c) mit dem ersten Wärmetauscher (3) und dem Gebläse (7) verbunden ist.

2. Wassererhitzer nach Anspruch 1, dadurch gekennzeichnet, dass der zweite Wärmetauscher (10) von einem flachen Gehäuse (11) umgeben ist, welches am Abgassammler (6) über zwei Stative (21, 22) befestigt ist, zwischen denen das Gebläse (7) angeordnet ist.

3. Wassererhitzer nach Anspruch 2, dadurch gekennzeichnet, dass die Stative (21, 22) als in das Gehäuse (11) des zweiten Wärmetauschers (10) mündende Abgasschächte ausgebildet sind, und der Abgassammler (6) durch eine innere Trennwand (6a) in zwei Kammern (6b, 6c) geteilt ist, von denen die eine (6b) mit dem ersten Wärmetauscher (3) und dem einen Abgasschacht (21) und die andere (6c) mit dem anderen Abgasschacht (22) und dem Eingangsstutzen des Gebläses (7) in Verbindung steht.

4. Wassererhitzer nach Anspruch 3, dadurch gekennzeichnet, dass das den zweiten Wärmetauscher (10) aufnehmende Gehäuse (11) zwischen den Einmündungen der beiden Abgasschächte (21, 22) eine vom Gehäuseboden ausgehende Trennwand (25) hat, die zwischen sich und dem Gehäusedeckel (14) einen Durchtrittspalt (28) für das Abgas frei lässt.

5. Wassererhitzer nach einem der Ansprüche 2 bis 4, dadurch gekennzeichnet, dass der Boden (32) des Gehäuses (11) geneigt ist und an seiner tiefsten Stelle ein Abflussrohr (35, 36) für Kondenswasser an das Gehäuse (11) angeschlossen ist.

6. Wassererhitzer nach einem der vorhergehenden Ansprüche, dadurch gekennzeichnet, dass der zweite Wärmetauscher (10) als Lamellenblock mit hindurchgeführter Wasserrohrschlange (13) ausgebildet ist.

7. Wassererhitzer nach einem der vorhergehenden Ansprüche, dadurch gekennzeichnet, dass das Abgasrohr (64) einen an das Gerät anschliessenden ansteigenden Abschnitt hat, vorzugsweise einen konzentrisch in einem Frischluftrohr (72) geführten, eine Wand (45) des Aufstellungsraumes durchsetzenden Abschnitt, und dass an der geräteseitigen Anschlussstelle des Abgasrohrs (64) eine Leitung (67) zum Abführen des im Abgasrohr (64) anfallenden Kondenswassers angeschlossen ist.

8. Wassererhitzer nach Anspruch 7, dadurch gekennzeichnet, dass die Steigung des Abgasrohrs (64) und gegebenenfalls des Frischluftrohrs (72) etwa 4° beträgt.

9. Wassererhitzer nach Anspruch 7, dadurch gekennzeichnet, dass die Leitung (67) zum Abführen des Kondenswassers in einen Winkelnippel (68) dicht eingesteckt ist, der an einen Anschlussstutzen (62) angeschlossen ist, welcher an einem getrennt vom Gerät an dessen Aufstellungswand montierten Mauerkasten (46) befestigt ist.

10. Wassererhitzer nach Anspruch 7, dadurch gekennzeichnet, dass das Frischluftrohr (72) mit einer seiner Steigung entsprechenden Schräglage in einem vorzugsweise aus Schaumstoff bestehenden Montagekörper (75) eingebettet ist, der für den Einbau in einen waagrecht verlaufenden Wanddurchbruch (65) ausgebildet bzw. vorgesehen ist.

11. Wassererhitzer nach Anspruch 7, dadurch gekennzeichnet, dass an die Ausblasöffnung des Abgasrohrs (64) ein Ausblasstutzen (74) angesetzt ist, dessen Ausblasöffnung mit einem gegenüber dem Öffnungsrand (93) etwas zurückversetzten Schutzgitter (94) versehen ist.

12. Wassererhitzer nach Anspruch 11, dadurch gekennzeichnet, dass der Ausblasstutzen (74) den Ringspalt zwischen Frischluftrohr (72) und Abgasrohr (64) gegen Regenwasser abschirmt.

13. Wassererhitzer nach einem der vorhergehenden Ansprüche, mit einem dünnwandigen Rohr, wie Frischluftrohr bzw. Abgasrohr, dessen Länge bei der Installation des Geräts an gegebene Einbauverhältnisse anpassbar ist und an dessen freiem Ende ein Bauteil befestigt ist, dadurch gekennzeichnet, dass auf der Aussenseite des Rohrs (72) mindestens zwei Montageröhrchen (76) befestigt sind, die sich über mindestens einen Teil der Rohrlänge erstrecken und deren Bohrungen zur passgerechten Aufnahme von Dübeln (77) für Befestigungsschrauben (78) dienen.

14. Wassererhitzer nach Anspruch 1, dessen Rückwand (52) an einem an der Aufstellungswand (45) des Gerätes vormontierten Installationselement (Mauerkasten 46) durch Schraubverbindungen mit jeweils zwei Gewindeteilen (50, 58) befestigt ist, von denen mindestens eine durch den Abgassammler (6) zur Vorderseite des Geräts verdeckt ist, dadurch gekennzeichnet, dass das Gehäuse des Abgassammlers (6) von einer koaxial zu der verdeckten Schraubverbindung angeordneten Buchse (55) zur Aufnahme eines Steckelementes (57) durchsetzt ist, welches an seiner in Steckrichtung vorn liegenden Stirnseite das eine Gewindeteil (58) der verdeckten Schraubverbindung trägt, deren anderes Gewindeteil (50) am Installationselement (46) unverdrehbar festgehalten ist.

15. Wassererhitzer nach Anspruch 14, dadurch gekennzeichnet, dass die Buchse (55) dicht an den Wänden (56) des Abgassammlers (6) befestigt und das Steckelement (57) verschiebbar, jedoch unverlierbar in der Buchse (55) gehalten ist.

16. Wassererhitzer nach Anspruch 15, dadurch gekennzeichnet, dass das Steckelement (57) zwischen dem Abgassammler (6) und der Rückwand (52) eine Scheibe (60) trägt, deren Aussendurchmesser grösser als der Innendurchmesser der Buchse (55) ist.

17. Wassererhitzer nach einem der Ansprüche 14 bis 16, dadurch gekennzeichnet, dass das Steckelement (57) in seinem von der Buchse (55) umschlossenen Abschnitt mindestens einen Gummiring (59) unverschiebbar trägt.

18. Wassererhitzer nach Anspruch 1, mit einem Wärmetauscher, bei welchem die mit Edelstahllamellen versehenen Wasserrohre aus einem Material bestehen, das gegen das Kondensat nicht beständig ist, wie Kupfer, dadurch gekennzeichnet, dass mindestens die von den Lamellen nicht bedeckten Oberflächenabschnitte der Wasserrohre mit einer gegen das Kondensat beständigen Schutzschicht spaltfrei überzogen sind.

19. Wassererhitzer nach Anspruch 18, dadurch gekennzeichnet, dass die zu schützenden Oberflächenabschnitte der Wasserrohre mit einer Lack- bzw. Harzschicht überzogen sind.

20. Wassererhitzer nach Anspruch 18, dadurch gekennzeichnet, dass die Wasserrohre mit einer galvanischen Schutzschicht, vorzugsweise mit einer Sulfamat-Nickel-Schicht überzogen sind.

21. Wassererhitzer nach Anspruch 18, dadurch gekennzeichnet, dass die Wasserrohre von einer korrosionsbeständigen Folie, insbesondere einer Edelstahlfolie umhüllt sind, deren Nahtbereiche dampfdicht miteinander verbunden sind.

22. Wassererhitzer nach einem der vorhergehenden Ansprüche, mit einem den Brenner (1), den Brennschacht (2) und die beiden Wärmetauscher (3, 10) samt Abgassammler (6) und Gebläse (7) umgebenden Gerätemantel (105), dadurch gekennzeichnet, dass an den Abgasweg, insbesondere an das Gehäuse des Gebläses (7), ein bis zu einer Öffnung (104) im Gerätemantel (105) heranreichendes Rohr (100) angeschlossen ist, welches durch ein lösbares Element (107) dicht verschliessbar ist und nach dessen Entfernen das Einführen einer Messsonde (108) in den Abgasweg gestattet.

23. Wassererhitzer nach Anspruch 22, dadurch gekennzeichnet, dass die Öffnung (104) im Gerätemantel (105) durch eine vorzugsweise wegschwenkbare Blende (106) nach aussen abgedeckt ist.

**Revendications**

1. Appareil de chauffage d'eau au gaz ou à huile, dans lequel sont disposés au-dessus d'un brûleur (1), une chambre de combustion (2) avec un échangeur de chaleur (3) et au-dessus un collecteur de gaz d'échappement (6) en forme de caisson, reliés en outre avec une soufflante (7), qui est fixée sur le collecteur de gaz d'échappement (6) et avec un tuyau de gaz d'échappement (64) et avec un deuxième échangeur de chaleur (10) dans lequel les gaz d'échappement se refroidissent jusqu'à ce qu'au moins une partie de la vapeur d'eau formée lors de la combustion ne se condense, caractérisé en ce que le deuxième échangeur de chaleur (10), conçu en un élément est disposé au-dessus de la soufflante (7), et est relié avec le premier échangeur de chaleur (3) et la soufflante (7) au moyen de deux canaux de gaz d'échappement (6b, 21 ou 22, 6c) passant séparemment par le collecteur de gaz d'échappement (6).

2. Appareil de chauffage d'eau selon la revendication 1, caractérisé en ce que le deuxième échangeur de chaleur (10) est entouré d'un carter plat (11), qui est fixé au collecteur de gaz d'échappement (6), entre deux supports (21, 22), entre lesquels est disposée la soufflante (7).

3. Appareil de chauffage d'eau selon la revendication 2, caractérisé en ce que les supports (21, 22) sont conçus en cheminées de gaz d'échappement débouchant dans le carter (11) du deuxième échangeur de chaleur (10) et en ce que le collecteur de gaz d'échappement (6) est séparé par une paroi de séparation intérieure (6a) en deux chambres (6b, 6c) desquelles l'une (6b) est reliée avec le premier échangeur de chaleur (3) et l'autre (6c) est reliée avec l'autre cheminée de gaz d'échappement (22) et la tubulure d'entrée de la soufflante (7).

4. Appareil de chauffage d'eau selon la revendication 3, caractérisé en ce que le carter (11) recevant le deuxième échangeur de chaleur (10) possède une paroi de séparation (25), partant du fond du carter, entre les embouchures des deux cheminées de gaz d'échappement (21, 22), qui laisse libre un interstice de passage (28) pour le gaz d'échappement, entre elle et le couvercle de carter (14).

5. Appareil de chauffage d'eau selon l'une des revendications 2 à 4, caractérisé en ce que le fond (32) du carter (11) est incliné et qu'une conduite d'écoulement (35, 36) est raccordée en son point le plus bas au carter (11), pour l'eau de condensation.

6. Appareil de chauffage d'eau selon l'une des revendications précédentes, caractérisé en ce que le deuxième échangeur de chaleur (10) est conçu en un bloc de lamelles avec un tube d'eau en serpentin (13) qui y est introduit.

7. Appareil de chauffage d'eau selon l'une des revendications précédentes, caractérisé en ce que le tuyau de gaz d'échappement (64) possède un tronçon de pente montante raccordé à l'appareil, avantageusement un tronçon guidé concentriquement dans un tuyau d'air frais (72), traversant une paroi (45) de l'enceinte d'installation, et en ce qu'au point de raccordement, situé côté appareil, du tuyau de gaz d'échappement (64), une conduite (67) est raccordée pour l'évacuation de l'eau de condensat produite dans le tuyau de gaz d'échappement (64).

8. Appareil de chauffage d'eau selon la revendication 7, caractérisé en ce que la pente montante du tuyau de gaz d'échappement (64) et le cas échéant du tuyau d'air frais (72) est d'environ 4°.

9. Appareil de chauffage d'eau selon la revendication 7, caractérisé en ce que la conduite (67) pour l'évacuation de l'eau de condensation est enfichée de manière étanche dans un raccord d'angle (68), qui est raccordé à une tubulure de raccordement (62), qui est fixée à un caisson maçonné (46), monté de manière séparée de l'appareil, à sa paroi d'installation.

10. Appareil de chauffage d'eau selon la revendication 7, caractérisé en ce que le noyau d'air frais (72) est encastré dans un corps de montage (75) réalisé avantageusement en un produit en mousse, avec une position inclinée correspondant à sa pente montante et qui est conformé ou bien prévu pour le montage dans un passage de paroi (65) se développant horizontalement.

11. Appareil de chauffage d'eau selon la revendication 7, caractérisé en ce qu'une tubulure de refoulement est appliquée à l'ouverture de refoulement du tuyau de gaz d'échappement (64), dont l'ouverture de refoulement est pourvue d'une grille de protection (94) quelque peu décalée par rapport à la bordure d'ouverture (93).

12. Appareil de chauffage d'eau selon la revendication 11, caractérisé en ce que la tubulure de refoulement (74) protège contre l'eau de pluie la fente annulaire entre tuyau d'air frais (72) et tuyau de gaz d'échappement (64).

13. Appareil de chauffage d'eau selon l'une des revendications précédentes, avec un tuyau à faible épaisseur de paroi, tel que le tuyau d'air frais, ou bien le tuyau de gaz d'échappement, dont la longueur lors de l'installation de l'appareil, correspond aux conditions d'installation et à l'extrémité duquel est fixé un élément, caractérisé en ce qu'au moins deux petits tuyaux de montage (76) sont fixés sur le côté extérieur du tuyau (72), qui s'étendent sur au moins une partie de la longueur de tuyau et dont les alésages servent à recevoir de manière ajustée des chevilles (77) pour des vis de fixation (78).

14. Appareil de chauffage d'eau selon la revendication 1, dont la paroi arrière (52) est fixée par des vis de fixation (50, 51), avec chacune deux parties filetées, à un élément d'installation (caisson maçonné 46) prémonté sur la paroi d'installation (45) de l'appareil, desquelles au moins l'une est recouverte, à la partie avant de l'appareil, par le collecteur de gaz d'échappement de l'appareil (6), caractérisé en ce que le carter du collecteur de gaz d'échappement (6) est traversé par une douille (55), disposée coaxialement à la liaison par vis qui est recouverte, pour recevoir un élément d'enfichage (57), qui porte une partie filetée (58) sur son côté frontal, situé à l'avant dans le sens de l'enfichage, dont l'autre partie filetée (51) est maintenue bloquée en rotation sur l'élément d'installation (46).

15. Appareil de chauffage d'eau selon la revendication 14, caractérisé en ce que la douille (55) est fixée de manière étanche sur les parois (56) du collecteur de gaz d'échappement (6) et en ce que l'élément d'enfichage (57) est mobile dans la douille (55), maintenu en ne pouvant pas toutefois s'échapper.

16. Appareil de chauffage d'eau selon la revendication 15, caractérisé en ce que l'élément d'enfichage (57) entre le collecteur de gaz d'échappement (6) et la paroi arrière (52) porte un disque (60), dont le diamètre extérieur est plus grand que le diamètre intérieur de la douille (55).

17. Appareil de chauffage d'eau selon lune des revendications 14 à 16, caractérisé en ce que l'élément d'enfichage (57) porte en sa section entourée par la douille (55), au moins une bague en caoutchouc (59), de manière non mobile.

18. Appareil de chauffage d'eau selon la revendication 1, avec un échangeur de chaleur, dans lequel les tubes d'eau pourvus de lamelles d'acier inoxydable sont composés d'un matériau qui n'est pas résistant contre le condensat, tel le cuivre, caractérisé en ce qu'au moins les sections de surface des tubes d'eau, qui ne sont pas recouvertes, sont revêtues, sans laisser d'interstice, d'une couche de protection résistante au condensat.

19. Appareil de chauffage d'eau selon la revendication 18, caractérisé en ce que les sections de surface des tubes d'eau à protéger sont recouvertes d'une couche de laque, respectivement de résine.

20. Appareil de chauffage d'eau selon la revendication 18, caractérisé en ce que les tubes d'eau sont revêtus d'une couche de protection galvanique, avantageusement d'une couche de sulfamate de nickel.

21. Appareil de chauffage d'eau selon la revendication 18, caractérisé en ce que les tubes d'eau sont entourés d'une feuille résistante à la corrosion, en particulier d'une feuille d'acier inoxydable, dont les zones des cordons sont reliées ensemble de manière étanche à la vapeur.

22. Appareil de chauffage d'eau selon l'une des précédentes revendications, avec une enveloppe d'appareil (105) entourant le brûleur (1), la chambre de combustion (2) et les deux échangeurs de chaleur (3, 10) avec le collecteur de gaz d'échappement (6) et la soufflante (7), caractérisé en ce que sur le trajet du gaz d'échappement, en particulier sur le carter de soufflante (7), est raccordé un tube (100) arrivant jusqu'à une ouverture (104) dans l'enveloppe de l'appareil (105) et qui est obturable de manière étanche par un élément (107) détachable et qui une fois enlevé, permet l'introduction d'une sonde de mesure (108) dans le trajet des gaz d'échappement.

23. Appareil de chauffage d'eau selon la revendication 22, caractérisé en ce que l'ouverture (104) dans l'enveloppe de l'appareil (105) est recouverte vers l'extérieur par un diaphragme (106) avantageusement escamotable en pivotant.

**Claims**

1. Gas-fired or oil-fired water heater in which a combustion shaft (2) with a heat exchanger (3) is arranged above a burner (1) and a box-shaped waste gas collector (6) above the former, also with a blower (7) which is secured on the waste gas collector (6) and connected to a waste gas pipe (64), and with a second heat exchanger (10) in which the waste gases are cooled sufficiently for at least part of the steam formed during the combustion to condense, characterized in that the second heat exchanger (10), which is constructed as an independent subassembly, is arranged above the blower (7) and connected to the first heat exchanger (3) and to the blower (7) by two waste gas ducts (6b, 21 or 22, 6c) passing separately through the waste gas collector (6).

2. Water heater according to Claim 1, characterized in that the second heat exchanger (10) is surrounded by a flat housing (11) which is secured to the waste gas collector (6) by two stands (21, 22), between which the blower (7) is arranged.

3. Water heater according to Claim 2, characterized in that the stands (21, 22) are constructed as waste gas shafts leading into the housing (11) of the second heat exchanger (10), and the waste gas collector (6) is divided by an inner partition wall (6a) into two chambers (6b, 6c), of which the one (6b) communicates with the first heat exchanger (3) and with the one waste gas chamber (21), and the other (6c) with the other waste gas chamber (22) and with the inlet connection of the blower (7).

4. Water heater according to Claim 3, characterized in that the housing (11) accommodating the second heat exchanger (10) has, between junctions of the two waste gas shafts (21, 22), a partition wall (25) starting from the housing base, which leaves clear a passage gap (28) for the waste gas between itself and the housing cover (14).

5. Water heater according to one of Claims 2 to 4, characterized in that the base (32) of the housing (11) is inclined and a drain-pipe (35, 36) for condensate water to the housing (11) is attached to its lowest point.

6. Water heater according to one of the preceding claims, characterized in that the second heat exchanger (10) is constructed as a lamella block with water pipe coil (13) passing through.

7. Water heater according to one of the preceding claims, characterized in that the waste gas tube (64) has a rising section adjoining the appliance, preferably a section guided concentrically in a fresh air tube and penetrating a wall (45) of the erection space, and that a pipe (67) to discharge the condensate water occurring in the waste gas tube (64) is connected to the appliance side connection point of the waste gas tube (64).

8. Water heater according to Claim 7, characterized in that the slope of the waste gas tube (64) and optionally of the fresh air tube (72) is approximately 4°.

9. Water heater according to Claim 7, characterized in that the pipe (67) to discharge the condensate water is plugged tightly into an angle nipple (68) which is attached to a connection (62) which is secured to a wall box (46) fitted to the erection wall of the appliance separately from the latter.

10. Water heater according to Claim 7, characterized in that the fresh air tube (72) is embedded in an oblique attitude corresponding to its slope in an assembly element (75) preferably consisting of foamed material to be constructed and/or provided for the installation into a horizontally oriented wall perforation (65).

11. Water heater according to Claim 7, characterized in that a blow-out connection (74), the blow-out orifice of which is provided with a protective grill (94) set back somewhat relative to the orifice edge (93) is attached to the blow-out orifice of the waste gas tube (64).

12. Water heater according to Claim 11, characterized in that the blow-out connection (74) shields the ring gap between fresh air tube (72) and waste gas tube (64) from rainwater.

13. Water heater according to one of the preceding claims, with a thin-walled tube, such as a fresh air tube and/or waste gas tube, the length of which is adaptable during installation of the appliance to existing erection conditions, and to the free end of which a component is secured, characterized in that at least two assembly tubes (76) are secured to the outside of the tube (72), which extend over at least a part of the tube length and the bores of which serve for the accurate reception of plugs (77) for securing screws (78).

14. Water heater according to Claim 1, the rear wall (52) of which is secured to an installation element (wall box 46) assembled on the erection wall (45) of the appliance by screw connections each having two screw-threaded parts (50, 58), of which at least one is masked by the waste gas collector (6) from the front side of the appliance, characterized in that the housing of the waste gas collector (6) is penetrated by a bushing (55) arranged coaxially to the masked screw connection to receive a plug element (57) which carries the one screw-threaded part (58) of the masked screw connection at its leading end face in the plug-in direction, the other screw-threaded part (50) of which is maintained non-rotatably on the installation element (46).

15. Water heater according to Claim 14, characterized in that the bushing (55) is secured tightly to the walls (56) of the waste gas collector (6) and the plug element (57) is maintained slidably but non-detachably in the bushing (55).

16. Water heater according to Claim 15, characterized in that plug element (57) carries between the waste gas collector (6) and the rear wall (52) a washer (60), the external diameter of which is greater than the internal diameter of the bushing (55).

17. Water heater according to one of Claims 14 to 16, characterized in that the plug element (57) carries at least one rubber ring (59) immovably in its section enclosed by the bushing (55).

18. Water heater according to Claim 1, with a heat exchanger in which the water tubes provided with special steel lamellae consist of a material which is not resistant to the condensate, such as copper, characterized in that at least those surface sections of the water tubes not covered by the lamellae are coated continuously with a protective layer resistant to the condensate.

19. Water heater according to Claim 18, characterized in that the surface sections of the water tubes required to be protected are coated with a layer of lacquer or resin.

20. Water heater according to Claim 18, characterized in that the water tubes are coated with a galvanic protective layer, preferably with a sulphamate-nickel layer.

21. Water heater according to Claim 18, characterized in that the water tubes are sheathed by a corrosion-resistant foil, particularly a special steel foil, the seam regions of which are mutually connected steam tightly.

22. Water heater according to one of the preceding claims, with an appliance casing (105) enclosing the burner (1), the combustion chamber (2) and the two heat exchangers (3, 10) with waste gas collector (6) and blower (7), characterized in that a tube (100) extending to an orifice (104) in the appliance casing (105) is connected to the waste gas path, particularly to the housing of the blower (7), is tightly closable by a releasable element (107), and after the removal of which it permits the introduction of a measuring probe (108) into the waste gas path.

23. Water heater according to Claim 22, characterized in that the orifice (104) in the appliance casing (105) is masked from the outside by a preferably swing-away shutter.

FIG. 2

FIG. 1

FIG.3

# FIG. 4

-7-

57 55 V 6 57 55 V

-3-

2

# FIG. 5

64 72 45 54a 46

52 47 49 49 50 60
54 54 58 6
56 53

55 55

57 57

59 59

56

# FIG. 6

0 178 416

FIG.8

IX

IX

76

76

72

FIG. 7

72

76

A

FIG. 9

72

76

77

78

74

FIG. 10

FIG. 11

0 178 416

FIG. 12